# EUROPEAN PATENT SPECIFICATION

(11) **EP 4 625 323 B1**
(45) Date of publication and mention of the grant of the patent: **02.09.2026**
(21) Application number: 24167909.1
(22) Date of filing: 29.03.2024
(51) Int. Cl.: G06T 7/80

(54) **METHODS FOR RELATIVE POSE ESTIMATION**
VERFAHREN ZUR RELATIVEN POSENSCHÄTZUNG
PROCÉDÉS D'ESTIMATION DE POSE RELATIVE

(43) Date of publication of application: 01.10.2025
(73) Proprietor: TOYOTA JIDOSHA KABUSHIKI KAISHA, Toyota-shi, Aichi-ken, 471-8571 (JP); Katholieke Universiteit Leuven, 3000 Leuven (BE)
(72) Inventor: CHUMERIN, Nikolay, 1140 Brussels (BE); PROESMANS, Marc, 3000 Leuven (BE); VERBIEST, Frank, 3000 Leuven (BE); DAWAGNE, Bruno, 3000 Leuven (BE); VANWEDDINGEN, Vincent, 3000 Leuven (BE)
(74) Representative: Cabinet Beau de Loménie

(56) References cited:
- EP-A1- 3 486 871
- WO-A1-2021/184218
- US-A1- 2011 157 373
- US-A1- 2020 349 723

## Description

### BACKGROUND OF THE INVENTION

### 1. Field of the Invention

The invention relates to relative pose estimation. In particular, the invention relates to methods for relative pose estimation between image sensors.

### 2. Description of Related Art

Relative pose estimation between cameras is a fundamental component in modern vision applications such as 3D modelling, robot localization and mapping, augmented reality, and autonomous driving.

In particular, in the context of robotics and autonomous driving, it is desirable to use multi-camera systems that cover a large field of view around a moving object. Therefore, it is important to be able to measure the relative pose between the cameras to ensure consistency between the data obtained from all the cameras (see [REF 1]).

To this aim, methods of the prior art use generally algorithms that can determine the translation (position) and rotation (orientation) of cameras with respect to an object in a 3D scene. Such methods may be divided into the methods aiming at calculating absolute poses relying on 3D coordinates, such as PnP solvers, and the methods aiming at calculating relative poses (see [REF 2], [REF 3]).

Most of these solvers require the use of robust estimation algorithms in order to estimate poses by distinguishing between inliers and outliers, such as Random Sample Consensus (RANSAC) algorithms [REF 5].

However, the distribution of the points within the image of the scene and the quality of the points in terms of suitability for feature matching can significantly impact the reliability of the pose estimation process. Further, complex scenes or scenarios with occlusions or ambiguous features may disturb the solver and/or require a large number of points for accurate pose estimation. Also, it is generally preferred to run the estimation process in real-time and minimize memory and required computational resources.

There is thus a need for a method solving problems of the prior art.

The following references disclose various methods relating to visual localization.
[REF 1] HARTLEY, Richard et ZISSERMAN, Andrew. Multiple view geometry in computer vision. Cambridge university press, 2003.
[REF 2] NISTÉR, David. An efficient solution to the five-point relative pose problem. IEEE transactions on pattern analysis and machine intelligence, 2004, vol. 26, no 6, p. 756-770.
[REF 3] STEWENIUS, Henrik, ENGELS, Christopher, et NISTÉR, David. Recent developments on direct relative orientation. ISPRS Journal of Photogrammetry and Remote Sensing, 2006, vol. 60, no 4, p. 284-294.
[REF 4] LOWE, David G. Distinctive image features from scale-invariant keypoints. International journal of computer vision, 2004, vol. 60, p. 91-110.
[REF 5] J. Oliensis. Exact two-image structure from motion. In IEEE Transactions on Pattern Analysis and Machine Intelligence, volume 24(12), pages 1618 - 1633, 2002.
[REF 6] FISCHLER, Martin A. et BOLLES, Robert C. Random sample consensus: a paradigm for model fitting with applications to image analysis and automated cartography. Communications of the ACM, 1981, vol. 24, no 6, p. 381-395.
[REF 7] WO2020164744 "SYSTEMS AND METHODS FOR IMAGE NORMALIZATION"
WO2021184218A1 discloses a relative pose calibration method and a related device. US20110157373A1 discloses a system and method for runtime determination of camera miscalibration.
US2020349723A1 discloses a method and system for aligning image data from a vehicle camera.
EP3486871A1 discloses a vision system and method for autonomous driving and/or driver assistance in a motor vehicle.

### SUMMARY OF THE INVENTION

According to aspects of the present disclosure, a computer-implemented method for relative pose estimation is provided. The method comprises steps of:
- (S10) capturing an ensemble of images of a scene with an ensemble of image sensors having at least a partial overlap of fields of view;
- (S20) extracting features from the images and matching such features to calculate at least one relative pose estimation between the image sensors;
- (S30) storing the at least one relative pose estimation in a buffer;
- (S40) repeating the preceding steps in order to store relative pose estimations captured at different times in the buffer;
- (S50) calculating a statistical distribution of the relative pose estimations stored within the buffer; and determining an anomaly in a configuration of the image sensors based on the evolution over time of statistical metrics calculated from the statistical distribution of the relative pose estimations within the buffer.

In the present description, the image sensors are generally cameras (for example fisheye cameras) which may be mounted on a rigid structure such as a vehicle. Further, the observed scene may be any scene that can be observed with image sensors. In particular, in the case of cameras mounted on a vehicle, the scene may be in the environment of the vehicle (for example neighboring cars) or further away, (for example a a distant landscape).

With the present method, pairs of images captured from pairs of image sensors with overlapping fields of view are compared in order to estimate relative poses between the image sensors.

Relative pose estimation generally refers to the estimation of a relative pose between two image sensors, such relative pose comprising relative positions and relative orientations of the image sensors. Intrinsics of the image sensors, such as the focal length may be assumed to be known. Enforcing intrinsic calibration constraints generally provides substantial improvement of both the accuracy and robustness of the structure and relative pose estimation.

In embodiments of the present disclosure, it may be assumed that positions and intrinsic parameters of the images sensors are known so that the relative pose estimation consists mainly in the estimation of the relative orientations between the images sensors.

The present method allows for online estimation and monitoring of the relative poses between different image sensors directed at a scene so that they have overlapping fields of view.

With the present method, it is especially possible to obtain a statistical distribution of relative pose estimations obtained at different times, which facilitates identification of several problems. In particular, the present method facilitates identification of problems such as abnormal configuration of the images sensors which could be, for example, misalignment with a predefined calibration, a relative pose that changes over time while having to deal with scenarios in the presence of features of low quality (scenery, weather conditions, day/night).

Further, the present method allows for analyzing if a relative pose estimation obtained at a given time is reliable enough to be stored in a buffer, based in particular on the reliability of the features extracted from the images captures with the image sensors. As a result, advantageously, the present method does not require large storage capabilities as only the poses are stored but the images and features can be discarded.

According to embodiments, the buffer has a fixed length so that when the buffer is full, storing of a relative pose estimation at a new time causes the earliest relative pose estimation within the buffer to be replaced by said relative pose estimation at a new time.

According to embodiments, the method further comprises determining an abnormal configuration of the image sensors based on a statistical metrics calculated from the statistical distribution of the relative pose estimations within the buffer, such metrics preferably comprising one among: median absolute deviation (MAD) and Inter-quartile range (IQR).

According to embodiments, the method further comprises converting the captured images of the scene to virtual views captured from virtual cameras before the step of extracting features from the images and matching such features to calculate at least one relative pose estimation between the image sensors.

According to embodiments, the method further comprises applying a mask to the captured image to mask out parts of the image corresponding to elements that are not observed by multiple image sensors (i.e. elements that are not in the area defined by the overlapped fields of view) before the step of (S20) extracting features from the images and matching such features to calculate at least one relative pose estimation between the image sensors.

According to embodiments, a relative pose estimation calculated from images captured with different image sensors at a given time comprises data representative of the relative orientation of the image sensors, such as three Euler angles.

According to embodiments, the step of extracting features from the images and matching such features to calculate at least one relative pose estimation between the image sensors further comprises selecting the image features to take into account in the calculation of the relative pose estimations based on the contribution of such image features to the relative pose estimation, the selected image features being defined as inliers.

According to embodiments, selecting the image features to take into account in the calculation of the relative pose estimations based on the contribution of such image features to the relative pose estimation comprises:
- determining inliers and outliers from the image features using a RANSAC algorithm; and
- generating the relative pose estimation using the image features based on the inliers while neglecting the outliers.

In the present disclosure, using a RANSAC algorithm advantageously provides a way to identify the feature matches that contribute to the (epipolar) geometry defined by the ensemble of image sensors, and thus allows for calculating, for example, a rotation between such image sensors, such feature matches being defined as inliers. Further, the RANSAC algorithm provides a way to identify the feature matches that do not contribute to the epipolar geometry, such feature matches being defined as outliers.

According to embodiments, the method further comprises:
- calculating a value of a selection criterion for a relative pose estimation, such selection criterion reflecting the reliability of the relative pose estimation;
- determining if the relative pose estimation is reliable enough to be added to the buffer based on the value of the selection criterion compared to a selection threshold,
wherein the relative pose estimation is stored in the buffer only if it is determined that the relative pose estimation is reliable enough to be added to the buffer.

According to embodiments, determining the selection threshold is dependent on characteristics of the image sensors used to capture the images from which the relative pose estimation is generated, such characteristics preferably comprising resolution of the image sensors and overlap between the field of view of the image sensors.

According to embodiments, the selection criterion is one among:
- a total feature match count reflecting a total amount of matches;
- an inlier count reflecting the number of image features used to generate the relative pose estimation;
- an inlier ratio reflecting a ratio of the number of image features used to generate the relative pose estimation to the number of image features extracted from the image sensors;
- an output of multiple RANSAC trials reflecting a stability of the solution;
- a speed of a vehicle to which the images sensors are attached;
- a length of the buffer;
- a buffer fill ratio reflecting a ratio of a number of elements in the buffer to a maximum number of elements in the buffer; and
- a time duration reflecting an amount of time elapsed since a time at which a latest relative pose estimation was added to the buffer.

In the present disclosure, the output of multiple RANSAC trials may be calculated by running a pose estimation several times RANSAC algorithms with similar or different (random) initializations in order to obtain a plurality of relative pose estimations, and by selecting one relative pose estimation out of such plurality of relative pose estimations. The selected relative pose estimation may in particular be chosen by comparing the estimations, and for example, selecting a best relative pose estimation as the median of the plurality of outputs.

The present disclosure is further related to a data processing system comprising means for executing the steps of the above described method.

The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a non-transitory recording medium readable by a computer and having recorded thereon a computer program including instructions for executing the steps of the above described method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart representing steps of a method for relative pose estimation according to embodiments of the present disclosure;
FIG. 2 is schematics illustrating aspects of a system for implementing a method for relative pose estimation according to embodiments of the present disclosure;
FIG. 3 is a diagram illustrating storing of relative poses estimations obtained at different times in a buffer according to embodiments of the present disclosure;
FIG. 4 is a set of three diagrams illustrating calculation of statistics of the stored relative pose estimation according to embodiments of the present disclosure.

### DETAILED DESCRIPTION OF EMBODIMENTS

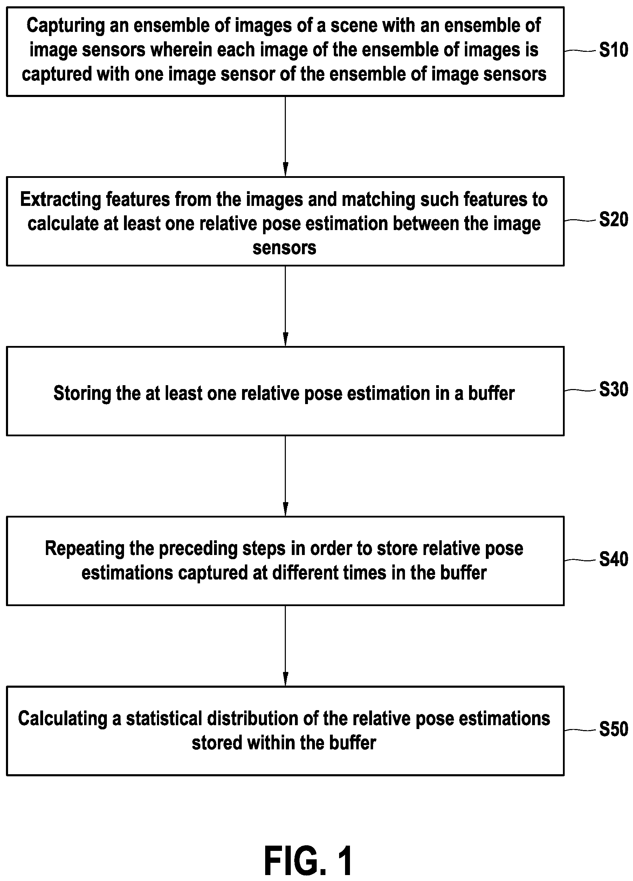

Methods and systems for relative pose estimation, which constitute exemplary embodiments of the present disclosure, are now going to be presented in relation with FIGS.1-4.

In reference to FIG.1, embodiments of the methods for relative comprises the following steps:
- (S10) capturing an ensemble of images of a scene with an ensemble of image sensors with at least partial overlapping of field of view;
- (S20) extracting features from the images and matching such features to calculate at least one relative pose estimation between the image sensors;
- (S30) storing the at least one relative pose estimation in a buffer;
- (S40) repeating the preceding steps in order to store relative pose estimations captured at different times in the buffer;
- (S50) calculating a statistical distribution of the relative pose estimations stored within the buffer.

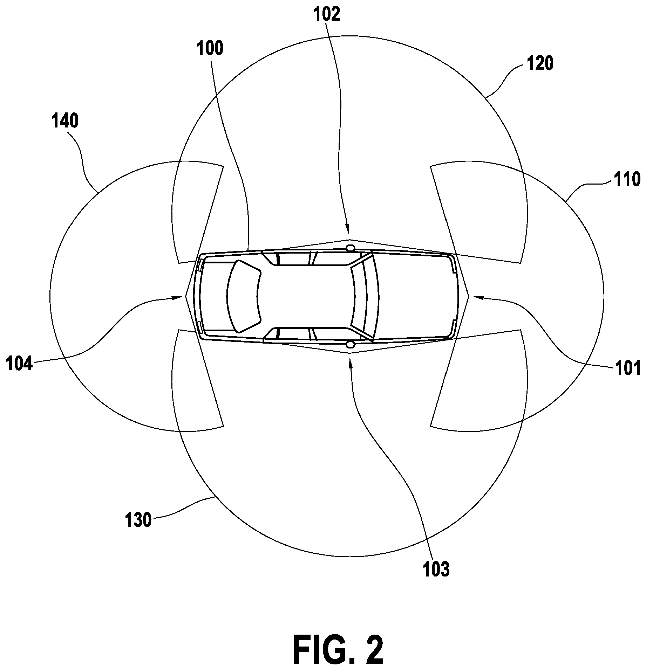

Further, an exemplary system to implement the present method is illustrated in FIG. 2. Such system is a vehicle provided with an ensemble of cameras 101, 102, 103, 104 with fields of view of different sizes 110, 120, 130, 140. The ensemble of cameras comprise one camera mounted on the front bumper 101, two cameras mounted on the mirrors 102, 103, and one camera mounted on the rear trunk 104. The cameras may be, for example, fisheye cameras having fields of views comprised between about 190 degrees and about 200 degrees.

More precisely, in step S10, pairs of images are captured with pairs of cameras from the ensemble of cameras 101, 102, 103, 104 with overlapping fields of view.

In step S20, the pairs of images are processed in order to extract image features and perform feature matching between the extracted image features.

The feature extraction and matching processes are fundamental techniques in computer vision used to identify distinctive patterns (features) in images (such as corners, edges, blobs) and to find corresponding features in different images. Each feature is characterized by its location and a numerical descriptors that captures the local information in its neighborhood. For the present method, the feature extraction and matching may be implemented with various models.

In embodiments, a graphical processing unit (GPU)-based version of the SIFT model named Cuda SIFT is used and run in real time (see [REF 4]). Alternatively, the feature extraction may also be implemented using other methods such as SURF, ORB, BRIEF, CARD, which are methods known to the skilled person and which can be found, for example, on the open source computer vision benchmark "OpenCV".

In embodiments, several specific techniques may be used in order to enhance the feature detection and matching between captured images, which will described in the following.

### Virtualization

Virtualization techniques may be used to facilitate feature comparisons. Indeed, features descriptors such as SIFT are designed to be invariant to rotation scale, and also partially invariant to noise, intensity changes or occlusions, however, a lot depends on the local image quality. This invariance is particularly advantageous in the case of images obtained from fisheye, which tend to provide images that distort the 3D scene noticeably, especially nearby the edges of the image. Consequently, the difference between images captured with different cameras can be quite substantial. The situation can be alleviated by creating virtual views of the original cameras such that projections of the 3D scenes are approximately aligned.

Therefore, given a camera model, it is possible to generate a new image (virtual view) as if seen through another (virtual) camera, possibly with a different projection model, different camera intrinsic parameters, and different orientations. However, the focal point generally remains the same.

For example, referring to the system illustrated in Fig. 2, images obtained from a left fisheye camera 102 and a right fisheye camera 103 may be converted to their corresponding equirect-angular projections, with the main axes more or less parallel to the ground plane. This is possible since there is prior information about the camera setup. As a result, for example, structures of buildings and facades in the images are better aligned, thereby allowing a better feature matching between the images. Further, virtualization of the images can be implemented real-time, as a per-pixel look-up table (see [REF 7]).

### Feature comparison metrics

In order to match features, corresponding descriptors are compared using a various metrics such as similarity and distance. For example, the Euclidean distance, d, and the cosine similarity, *S_{C}*, may be used, which may be expressed as follows. $d \left(x, y\right) = \left‖x-y\right‖ = \sqrt{{\left({x}_{1}-{y}_{1}\right)}^{2} + ⋯ + {\left({x}_{n}-{y}_{n}\right)}^{2}}$ ${S}_{C} \left(x, y\right) = \left(x⋅y\right)$

In Equations 1-2, x and y are coordinates of the local descriptors. Given normalized descriptors, *fₐ, f_{b},* characterized by ∥*fₐ*∥ = ∥*f_{b}*∥ = 1, both metrics verify the following relationship. ${d}^{2} \left({f}_{a}, {f}_{b}\right) = 2 \left(1-{S}_{C}\left({f}_{a}, {f}_{c}\right)\right) = 2 \left(1-{f}_{a},{f}_{b}\right)$

For each feature point in one image, a corresponding matching feature may be found from the following criteria:
- the best match in the other image is considered to be the one for which the distance is the smallest, or the similarity the highest;
- the similarity between both descriptors exceeds a given threshold; or
- the best match in the other image is considered to be the one for which the distance is a fraction of the distance to the second best match (such fraction being called the Lowe ratio, see [REF 4]).

Further, it is possible to impose that the matches are reciprocal.

A feature match may be only kept when all selected conditions are met. The features that do not have a match are discarded. The features that do have a match are considered as potential inliers/outliers, the classification of which will be determined by applying a RANSAC algorithm. In particular, the matched features may be processed through a RANSAC scheme to find an epipolar geometry and relative pose.

In embodiments, even if given pairs of features are considered to match, it may not necessarily mean that the corresponding two points correspond to the same physical point, or that their location is sufficiently accurately defined (e.g. due to noise, viewing angle, etc). However, geometrical constraints between images generally impose that feature matches lie on the epipolar geometry defined between the two cameras. A goal of RANSAC is therefore to identify the feature matches that contribute to the epipolar geometry, and thus allow calculating a rotation between the cameras, these feature matches being the inliers, and, also identify the feature matches that cannot contribute to the epipolar geometry, being defined as outliers.

### Masking

Several unwanted features may be eliminated by applying a masking strategy. For example, fisheye cameras have a wide field of view that lead to the inclusion of parts of the vehicle itself in the image captured by the camera. As these areas are not part of the scene to be captured, it is advantageous to apply masks to cut out these parts from the images.

Further, since the relative pose may be determined by feature correspondences between image pairs, it is possible to eliminate the image areas which are not or cannot be visible in the corresponding paired image. Such areas can be determined automatically by tracing rays from one camera viewpoint into a 3D space, sample along the rays and verify if the sampled points project onto the second camera view. For example, referring to the system illustrated in FIG. 2, repeating this operation for each camera in each view results in eight masks, which can be referred to as inter-camera masks.

Advantageously, the masking may be used in synergy with the virtualization process. In particular, while virtualizing the images during feature detection and matching, the masks may also be virtualized to match the virtual views.

In step S20, once the features have been matched, the relative poses may be calculated. The relative pose estimation, which can consist in the calculation of the relative orientations between a pair of image sensors, can be calculated via several methods. In particular, known methods may be used such as PnP solvers.

For example, for real-time purposes and simplicity, a 3-point approach may be used, which can be optionally linearized in order to simplify calculation. Interestingly, in the present method, the camera positions are assumed to be known prior to the image capture. As a result, the mathematics of the 3-point approach is simplified to only finding relative orientations (i.e. finding rotation angles such as three Euler angles). This can be done by using only 2D point correspondences and does not require any 3D point correspondences.

Further, in case there is an anomaly in the positions of the images sensors compared to what is initially assumed, the determination of the Euler rotation angles is sufficient to infer such a positon anomaly.

In embodiments, a RANSAC algorithm may be applied to calculate the relative pose estimations despite the presence of outliers in the set of feature correspondences obtained after feature matching. RANSAC may be applied in two steps. In a first step, a hypothesis is generated from random samples, and in a second step the hypothesis is verified or evaluated on the data.

In embodiments, the RANSAC algorithm is applied in particular ways through different modes which can be selected and configured by user-defined parameters. In a default mode, triple candidates (feature correspondences) are randomly sampled to estimate a relative pose (actually a relative orientation) via a 3-point approach. Further, the current pose is evaluated against the remaining candidates and an amount of inlier given a user-defined error threshold is determined. A directional error may be used to compare angles between observed and expected rays instead of pixels, see [REF 5]. The estimation and evaluation of the relative poses is iterated to maximize the amount of inliers.

In a polish mode, RANSAC is applied first by implementing a local optimization. An additional limited (user-defined) amount of inliers is added to refine the pose. Advantageously, this allows for leveraging least square-based calculation which has an increased accuracy in an early stage, and thereby provides faster convergence to a solution (despite a higher computational cost). After the initial RANSAC search of a result, all available inliers are used and refit until there is no change in the provided solution.

In step S30, the relative poses that have been estimated between pairs of images are stored in a buffer.

Embodiments of the present method may utilize many different configurations of buffer depending on the dimensionality of the measurement. For example, when the relative pose estimation consists in the estimation of the relative orientation, the buffer may consist in three buffers, one buffer for each Euler angle characterizing the relative orientations.

In embodiments, the buffer may actually be composed of more than three buffers, for example, when the relative pose estimation comprises the estimation of more than the three Euler angles. Further, the buffer's entries do not necessarily have to correspond to each timestamp at which the image sensors capture images. In particular, it is possible to choose to skip and insert only a single estimation out of a plurality of estimations acquired at successive timestamps. It is also possible to run the RANSAC algorithms through a plurality of relative pose estimations instead of a single one.

In step S40, the steps are repeated over time in order to accumulate a plurality of relative pose estimations in the buffer. In embodiments, the buffer may have a finite size. Further, the buffer may be cyclic. This means that when the buffer has a length n, and is filled with n timestamps, during evaluation of frame or timestamp n+1, the earliest entry of the buffer is taken out, and the new one n+1 comes in.

In step S50, statistical calculation is performed on the elements of the buffer, or the elements of each of the buffers. In particular, a statistical distribution is calculated. In embodiments, the statistical distribution is represented in the form of a histogram and statistical metrics may be calculated, and possibly represented on this histogram.

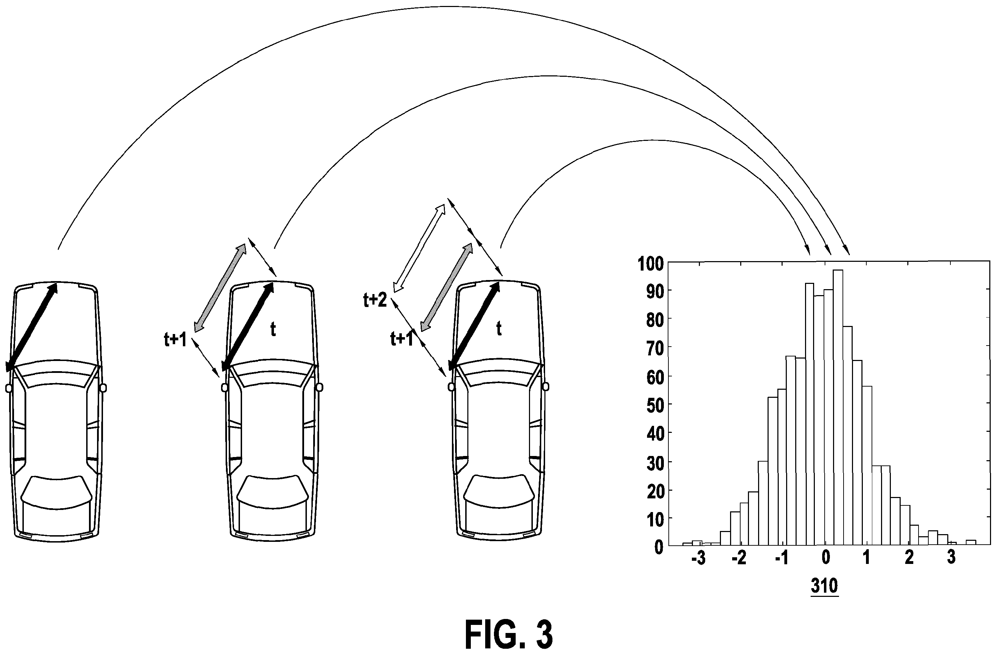

FIG.3 shows a pair of cameras mounted on a vehicle from which relative pose estimation are calculated at three different timestamps, t, t+1, t+2, and stored in a buffer from which a histogram 310 of statistical distribution may be represented.

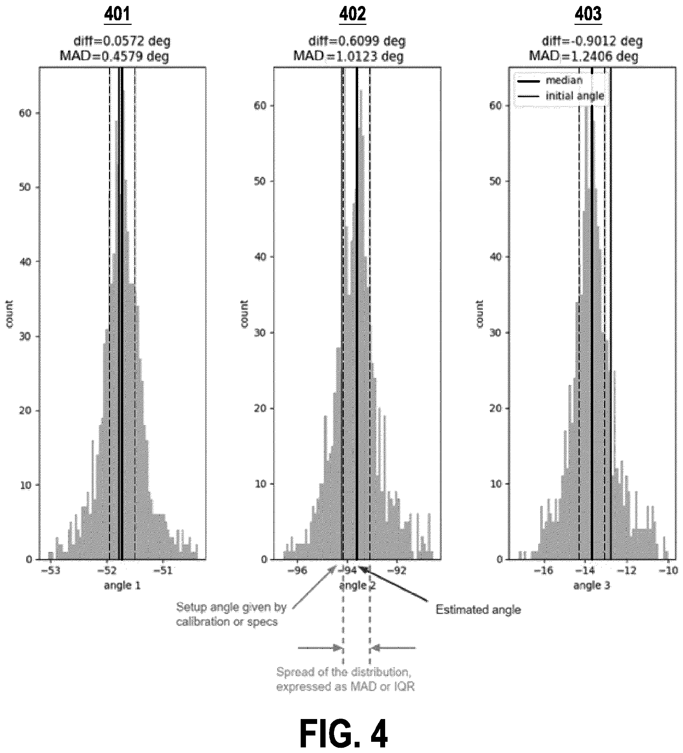

FIG.4 shows statistics calculated over the relative pose estimations that are stored in the buffer during implementation of the present method. Three histograms 401, 402, 403, corresponding to the three Euler angles are represented and different metrics are indicated in real-time. In particular, while performing relative pose estimation with the present method, the histogram and overlayed statistics show the current pose estimation compared to what is assumed initially (i.e. calibration or setup specifications). The difference may provide some indication on inaccuracies of the initial assumptions. Further, other statistical metrics evaluating the spread of the distribution provide information on the reliability of the relative pose estimation.

Interestingly, as explained hereabove, the present method provides relative pose estimations for each camera pair per timestamps and stores these estimations in a buffer (or actually three buffer corresponding to three Euler angles). From the shape of the distribution, and the associated metrics, can be inferred the reliability of the estimation, due in particular to the quality of the condition under which the relative pose was estimated.

Further, it is possible to determine if there is an anomaly in the configuration of the image sensors or in many other parameters, including the quality of the image features. As a general rule, a narrow distribution corresponds to a more reliable relative pose estimation that is not affected by any anomaly in the image sensors or in the quality of the features.

Different metrics may be used to infer and monitor the reliability of the relative pose estimation. Known metrics of the prior art such as average and spread may be a possible choice, however these metrics are affected by extreme outlier values and non normality (i.e. deviation from the classical shape of a normal distribution.

Therefore, referring to Fig. 4, in the present method, other metrics are preferred such as the median absolute deviation (MAD) and the Inter quartile range (IQR). The metrics may be expressed as follows. $MAD = median \left(\left|{X}_{i}-median\left(X\right)\right|\right)$

Interestingly, even if the histogram obtained from the relative pose estimations in the buffer tends to be normal, these metrics provide further analysis. In particular, it is possible to overlay the calculated metrics and the calibration parameters on top of the histogram. The difference between the setup angle and the estimate provides indication on the deviation of the actual relative poses compared to the relative pose known from calibration. This deviation may leveraged to correct the inaccuracies and possibly compensate with a relative pose which is different from what is initially assumed.

Further, an important metrics to be monitored is the stability over time of the relative pose estimations (rotation angles).

In order to ensure reliability of the relative poses, the present method may therefore also comprise a selection of the relative pose estimations in order to select the ones that are reliable enough to be stored in the buffer. As these selection may be implemented frame-by-frame (i.e. at each timestamp), is may be referred to as a frame selection. The frame selection may be based on several criteria.

The amount of inliers, or "inlier count", which is one of the results of the RANSAC operation, is one of more important metrics to determine whether an estimate is reliable or not. Setting a threshold guarantees that the pose estimate is based on many samples and has a high probability of being reliable. The inlier count depends on the resolution and the overlapping area. For a setup where the front camera pairs and rear camera pairs show a substantial difference in overlap, it can be an option to set different thresholds.

Another criterion is the "inlier ratio", which describes the ratio between the amount of inliers and the total amount of features matches found. When the inlier ratio is low, it means that there is a significant number of spurious matches around that casts doubts as to how the observed scene looks like. In the case of periodicities (such as fences, building windows, or similar objects) several matches might have been discarded because of a Lowe ratio, so this lowers the inlier ratio, on the other hand several spurious matches might still have survived, as one cannot guarantee to be able to remove spurious matches completely. For this reason, putting an additional threshold on the inlier ratio allows to avoid scenarios that are possibly ambiguous.

Another criterion is the "buffer length". The cyclic buffer is generally given a specific length. The higher the buffer length, the more samples are available, the more bell-shaped the distribution will be, and the better the distribution is appropriate for statistical analysis. On the other hand, a longer buffer will increase processing time. Alternatively, a buffer that is too short may provide excessive spread of pose estimations to get reliable statistics

Another criterion is the "buffer fill ratio". Due to the frame selection procedure, the cyclic buffer will not be filled continuously. If the amount of samples in the buffer fails to reach a certain percentage of the buffer length, the buffer fill ratio, the distribution may not be representative for the overall statistics, so it may be advantageous to check the status of the buffer.

Another criterion is the "maximum elapsed time". While only selected frames are being added to the buffer, the buffer will generally be filled with a delay. Depending on the 3D scene, it is possible that buffer is not filled for some time (e.g. driving next to a guard rail on a highway and no structural features to be found). One can argue that one does not want to have to deal with samples which are too far in the past. By setting a maximum elapsed time samples which are from an earlier timestamp are deleted from the buffer.

Another criterion is the "car speed". It is advantageous to fill the buffer with relative pose estimation only when the car is driving. Indeed, at standstill or at very slow speed, the same scene is being viewed by the cameras for a longer tie. Therefore, similar feature matches will be used to create pose estimates, which will not be necessarily representative for the global average or median. Consequently, if one allows to have the buffer filled with these measurements, the statistics would only be considering this particular scenario, and could possibly generate a bias on the output statistics.

## Claims

1. A computer-implemented method for relative pose estimation comprising:
- (S10) capturing an ensemble of images of a scene with an ensemble of image sensors having at least partial overlapping of fields of view;
- (S20) extracting features from the images and matching such features to calculate at least one relative pose estimation between the image sensors;
- (S30) storing said at least one relative pose estimation in a buffer;
- (S40) repeating the preceding steps in order to store relative pose estimations captured at different times in the buffer;
**characterized in that** the method further comprises:
- (S50) calculating a statistical distribution of the relative pose estimations stored within the buffer; and
- determining an anomaly in a configuration of the image sensors based on the evolution over time of statistical metrics calculated from the statistical distribution of the relative pose estimations within the buffer.

2. The method of claim 1, wherein the buffer has a fixed length so that when the buffer is full, storing of a relative pose estimation at a new time causes the earliest relative pose estimation within the buffer to be replaced by said relative pose estimation at a new time.

3. The method of claim 1 or 2, wherein the statistical metrics comprise one among: median absolute deviation (MAD) and Inter-quartile range (IQR).

4. The method of any of claims 1 to 3, further comprising
- converting the captured images of the scene to virtual views captured from virtual cameras before the step of (S20) extracting features from the images and matching such features to calculate at least one relative pose estimation between the image sensors.

5. The method of any of claims 1 to 4, further comprising:
- applying a mask to the captured image to mask out parts of the image corresponding to elements that are not observed by multiple image sensors before the step of (S20) extracting features from the images and matching such features to calculate at least one relative pose estimation between the image sensors.

6. The method of any of claims 1 to 5, wherein a relative pose estimation calculated from images captured with different image sensors at a given time comprises data representative of the relative orientation of the image sensors, such as three Euler angles.

7. The method of any of claims 1 to 6, wherein the step of (S20) extracting features from the images and matching such features to calculate at least one relative pose estimation between the image sensors further comprises:
- selecting the image features to take into account in the calculation of the relative pose estimations based on the contribution of such image features to the relative pose estimation, the selected image features being defined as inliers.

8. The method of claim 7, wherein selecting the image features to take into account in the calculation of the relative pose estimations based on the contribution of such image features to the relative pose estimation comprises:
- determining inliers and outliers from the image features using a RANSAC algorithm; and
- generating the relative pose estimation using the image features based on the inliers while neglecting the outliers.

9. The method of any of claims 1 to 8, further comprising:
- calculating a value of a selection criterion for a relative pose estimation, such selection criterion reflecting the reliability of the relative pose estimation;
- determining if the relative pose estimation is reliable enough to be added to the buffer based on the value of the selection criterion compared to a selection threshold,
wherein the relative pose estimation is stored in the buffer only if it is determined that the relative pose estimation is reliable enough to be added to the buffer.

10. The method of claim 9, wherein determining the selection threshold is dependent on characteristics of the image sensors used to capture the images from which the relative pose estimation is generated, such characteristics preferably comprising resolution of the image sensors and overlap between the field of view of the image sensors.

11. The method of claim 9 or 10, wherein the selection criterion is one among:
- a total feature match count reflecting a total amount of matches;
- an inlier count reflecting the number of image features used to generate the relative pose estimation;
- an inlier ratio reflecting a ratio of the number of image features used to generate the relative pose estimation to the number of image features extracted from the image sensors;
- an output of multiple RANSAC trials reflecting a stability of the solution;
- a speed of a vehicle to which the image sensors are attached;
- a length of the buffer;
- a buffer fill ratio reflecting a ratio of a number of elements in the buffer to a maximum number of elements in the buffer; and
- a time duration reflecting an amount of time elapsed since a time at which a latest relative pose estimation was added to the buffer.

12. A data processing system comprising means for executing the steps of the method according to any of claims 1 to 11.

13. A computer program including instructions for executing the steps of the method according to any of claims 1 to 11 when said program is executed by a computer.

14. A non-transitory recording medium readable by a computer and having recorded thereon a computer program including instructions for executing the steps of the method according to any of claims 1 to 11.

## Patentansprüche

1. Computerumgesetztes Verfahren zur relativen Posenschätzung, umfassend:
- (S10) Aufnehmen eines Satzes von Bildern einer Szene mit einem Satz von Bildsensoren, die mindestens teilweise überlappende Sichtfelder aufweisen;
- (S20) Extrahieren von Merkmalen aus den Bildern und Abgleichen dieser Merkmale, um mindestens eine relative Posenschätzung zwischen den Bildsensoren zu berechnen;
- (S30) Speichern der mindestens einen relativen Posenschätzung in einem Puffer;
- (S40) Wiederholen der vorhergehenden Schritte, um relative Posenschätzungen, die zu verschiedenen Zeitpunkten aufgenommen wurden, in dem Puffer zu speichern;
**dadurch gekennzeichnet, dass** das Verfahren ferner umfasst:
- (S50) Berechnen einer statistischen Verteilung der relativen Posenschätzungen, die in dem Puffer gespeichert sind; und
- Bestimmen einer Anomalie einer Konfiguration der Bildsensoren basierend auf der Entwicklung im Verlauf der Zeit von statistischen Metriken, die aus der statistischen Verteilung der relativen Posenschätzungen in dem Puffer berechnet werden.

2. Verfahren nach Anspruch 1, wobei der Puffer eine feste Länge aufweist, so dass, wenn der Puffer voll ist, das Speichern einer relativen Posenschätzung zu einem neuen Zeitpunkt bewirkt, dass die älteste relative Posenschätzung in dem Puffer durch die relative Posenschätzung zu einem neuen Zeitpunkt ersetzt wird.

3. Verfahren nach Anspruch 1 oder 2, wobei die statistischen Metriken eines umfassen von: einer mittleren absoluten Abweichung (MAD) und einem Interquartilsabstand (IQR).

4. Verfahren nach einem der Ansprüche 1 bis 3, ferner umfassend
- Konvertieren der aufgenommenen Bilder der Szene in virtuelle Ansichten, die vor dem Schritt (S20) des Extrahierens der Merkmale aus den Bildern und des Abgleichens dieser Merkmale, um mindestens eine relative Posenschätzung zwischen den Bildsensoren zu berechnen, von virtuellen Kameras aufgenommen werden.

5. Verfahren nach einem der Ansprüche 1 bis 4, ferner umfassend:
- Anwenden einer Maske auf das aufgenommene Bild, um Teile des Bildes auszublenden, die Elementen entsprechen, die nicht von mehreren Bildsensoren beobachtet werden, vor dem Schritt (S20) des Extrahierens von Merkmalen aus den Bildern und dem Abgleichen dieser Merkmale, um mindestens eine relative Posenschätzung zwischen den Bildsensoren zu berechnen.

6. Verfahren nach einem der Ansprüche 1 bis 5, wobei eine relative Posenschätzung, die aus Bildern berechnet wird, die mit verschiedenen Bildsensoren zu einem gegebenen Zeitpunkt aufgenommen werden, Daten, die für die relative Orientierung der Bildsensoren repräsentativ sind, wie etwa drei Eulerwinkel, umfassen.

7. Verfahren nach einem der Ansprüche 1 bis 6, wobei der Schritt (S20) des Extrahierens von Merkmalen aus den Bildern und des Abgleichens dieser Merkmale, um mindestens eine relative Posenschätzung zwischen den Bildsensoren zu berechnen, ferner umfasst:
- Auswählen der Bildmerkmale, die bei der Berechnung der relativen Posenschätzungen basierend auf dem Beitrag dieser Bildmerkmale zu der relativen Posenschätzung zu berücksichtigen sind, wobei die ausgewählten Bildmerkmale als Einschlüsse definiert sind.

8. Verfahren nach Anspruch 7, wobei das Auswählen der Bildmerkmale, die bei der Berechnung der relativen Posenschätzungen basierend auf dem Beitrag dieser Bildmerkmale zu der relativen Posenschätzung zu berücksichtigen sind, umfasst:
- Bestimmen von Einschlüssen und Ausreißern aus den Bildmerkmalen unter Verwendung eines RANSAC-Algorithmus; und
- Generieren der relativen Posenschätzung unter Verwendung der Bildmerkmale basierend auf den Einschlüssen, während die Ausreißer vernachlässigt werden.

9. Verfahren nach einem der Ansprüche 1 bis 8, ferner umfassend:
- Berechnen eines Wertes eines Auswahlkriteriums für eine relative Posenschätzung, wobei dieses Auswahlkriterium die Zuverlässigkeit der relativen Posenschätzung wiedergibt;
- Bestimmen, ob die relative Posenschätzung zuverlässig genug ist, um zu dem Puffer hinzugefügt zu werden, basierend auf dem Wert des Auswahlkriteriums im Vergleich zu einer Auswahlschwelle,
wobei die relative Posenschätzung nur in dem Puffer gespeichert wird, falls bestimmt wird, dass die relative Posenschätzung zuverlässig genug ist, um zu dem Puffer hinzugefügt zu werden.

10. Verfahren nach Anspruch 9, wobei das Bestimmen der Auswahlschwelle von Kennzeichen der Bildsensoren abhängig ist, die verwendet werden, um die Bilder aufzunehmen, aus denen die relative Posenschätzung erzeugt wird, wobei diese Kennzeichen bevorzugt die Auflösung der Bildsensoren und die Überlappung zwischen den Sichtfeldern der Bildsensoren umfassen.

11. Verfahren nach Anspruch 9 oder 10, wobei das Auswahlkriterium eines ist von:
- einer gesamten Merkmalsübereinstimmungszählung, die eine Gesamtmenge der Übereinstimmungen wiedergibt;
- einer Einschlusszählung, welche die Anzahl von Bildmerkmalen wiedergibt, die verwendet werden, um die relative Posenschätzung zu erzeugen;
- einem Einschlussverhältnis, welches das Verhältnis der Anzahl von Bildmerkmalen, die verwendet werden, um die relative Posenschätzung erzeugen, zu der Anzahl von Bildmerkmalen, die aus den Bildsensoren extrahiert werden, wiedergibt;
- einer Ausgabe von mehreren RANSAC-Versuchen, die eine Stabilität der Lösung wiedergeben;
- einer Geschwindigkeit eines Fahrzeugs, an dem die Bildsensoren angebracht sind;
- einer Länge des Puffers;
- einem Pufferfüllverhältnis, das ein Verhältnis einer Anzahl von Elementen in dem Puffer zu einer maximalen Anzahl von Elementen in dem Puffer wiedergibt; und
- einer Zeitdauer, die eine Zeitmenge wiedergibt, die seit einem Zeitpunkt verstrichen ist, zu dem eine neueste relative Posenschätzung zu dem Puffer hinzugefügt wurde.

12. Datenverarbeitungssystem, umfassend Mittel zum Durchführen der Schritte des Verfahrens nach einem der Ansprüche 1 bis 11.

13. Computerprogramm, umfassend Anweisungen zum Durchführen der Schritte des Verfahrens nach einem der Ansprüche 1 bis 11, wenn das Programm von einem Computer durchgeführt wird.

14. Nicht vorübergehendes Aufzeichnungsmedium, das computerlesbar ist und auf dem ein Computerprogramm aufgezeichnet ist, das Anweisungen zum Ausführen der Schritte des Verfahrens nach einem der Ansprüche 1 bis 11 umfasst.

## Revendications

1. Procédé mis en œuvre par ordinateur pour une estimation de pose relative comprenant les étapes suivantes :
- (S10) capture d'un ensemble d'images d'une scène à l'aide d'un ensemble de capteurs d'images dont les champs de vision se chevauchent au moins partiellement ;
- (S20) extraction de particularités à partir des images et mise en concordance ces particularités pour calculer au moins une estimation de pose relative entre les capteurs d'images ;
- (S30) stockage de ladite au moins une estimation de pose relative dans un tampon ;
- (S40) répétition des étapes précédentes afin de stocker dans le tampon des estimations de pose relatives capturées à différents moments ;
**caractérisé en ce que** le procédé comprend en outre les étapes suivantes :
- (S50) calcul d'une distribution statistique des estimations de pose relatives stockées dans le tampon ; et
- détermination d'une anomalie dans une configuration des capteurs d'images sur la base de l'évolution dans le temps de métriques statistiques calculées à partir de la distribution statistique des estimations de pose relatives dans le tampon.

2. Procédé selon la revendication 1, dans lequel le tampon a une longueur fixe de sorte que lorsque le tampon est plein, le stockage d'une estimation de pose relative à un nouveau moment entraîne le remplacement de l'estimation de pose relative la plus ancienne dans le tampon par ladite estimation de pose relative à un nouveau moment.

3. Procédé selon la revendication 1 ou 2, dans lequel les métriques statistiques comprennent l'un parmi : un écart absolu médian (MAD) et un intervalle interquartile (IQR).

4. Procédé selon l'une des revendications 1 à 3, comprenant en outre l'étape suivante
- conversion des images capturées de la scène en vues virtuelles capturées par des caméras virtuelles avant l'étape (S20) d'extraction de particularités à partir des images et de mise en concordance de ces particularités pour calculer au moins une estimation de pose relative entre les capteurs d'images.

5. Procédé selon l'une des revendications 1 à 4, comprenant en outre l'étape suivante :
- application d'un masque à l'image capturée afin de masquer les parties de l'image correspondant à des éléments qui ne sont pas observés par de multiples capteurs d'images avant l'étape (S20) d'extraction de particularités à partir des images et de mise en concordance de ces particularités pour calculer au moins une estimation de pose relative entre les capteurs d'images.

6. Procédé selon l'une des revendications 1 à 5, dans lequel une estimation de pose relative calculée à partir d'images capturées à l'aide de différents capteurs d'images à un temps donné comprend des données représentatives de l'orientation relative des capteurs d'images, telles que trois angles d'Euler.

7. Procédé selon l'une des revendications 1 à 6, dans lequel l'étape (S20) d'extraction de particularités à partir des images et de mise en concordance de ces particularités pour calculer au moins une estimation de pose relative entre les capteurs d'images comprend en outre :
- la sélection des particularités d'image à prendre en compte dans le calcul des estimations de pose relatives sur la base de la contribution de ces particularités d'image à l'estimation de pose relative, les particularités d'image sélectionnées étant définies comme des valeurs non aberrantes.

8. Procédé selon la revendication 7, dans lequel la sélection des particularités d'image à prendre en compte dans le calcul des estimations de pose relatives sur la base de la contribution de ces particularités d'image à l'estimation de pose relative comprend :
- la détermination des valeurs non aberrantes et des valeurs aberrantes à partir des particularités d'image à l'aide d'un algorithme RANSAC ; et
- la génération de l'estimation de pose relative à l'aide des particularités d'image sur la base des valeurs non aberrantes tout en négligeant les valeurs aberrantes.

9. Procédé selon l'une des revendications 1 à 8, comprenant en outre les étapes suivantes :
- calcul d'une valeur d'un critère de sélection pour une estimation de pose relative, ce critère de sélection reflétant la fiabilité de l'estimation de pose relative ;
- détermination de si l'estimation de pose relative est suffisamment fiable pour être ajoutée au tampon sur la base de la comparaison de la valeur du critère de sélection à un seuil de sélection,
dans lequel l'estimation de pose relative n'est stockée dans le tampon que s'il est déterminé que l'estimation de pose relative est suffisamment fiable pour être ajoutée au tampon.

10. Procédé selon la revendication 9, dans lequel la détermination du seuil de sélection dépend de caractéristiques des capteurs d'images utilisés pour capturer les images à partir desquelles l'estimation de pose relative est générée, ces caractéristiques comprenant de préférence la résolution des capteurs d'images et le chevauchement entre les champs de vision des capteurs d'images.

11. Procédé selon la revendication 9 ou 10, dans lequel le critère de sélection est l'un parmi :
- un compte total de concordances de particularités reflétant une quantité totale de concordances ;
- un compte de valeurs non aberrantes reflétant le nombre de particularités d'image utilisées pour générer l'estimation de pose relative ;
- un rapport de valeur non aberrante reflétant un rapport du nombre de particularités d'image utilisées pour générer l'estimation de pose relative sur le nombre de particularités d'image extraites des capteurs d'images ;
- une sortie de multiples essais RANSAC reflétant une stabilité de la solution ;
- une vitesse d'un véhicule sur lequel les capteurs d'images sont montés ;
- une longueur du tampon ;
- un rapport de remplissage de tampon reflétant un rapport d'un nombre d'éléments dans le tampon sur un nombre d'éléments maximal dans le tampon ; et
- une durée reflétant une quantité de temps écoulée depuis un moment où une dernière estimation de pose relative a été ajoutée au tampon.

12. Système de traitement de données comprenant des moyens pour exécuter les étapes du procédé selon l'une des revendications 1 à 11.

13. Programme informatique comportant des instructions pour exécuter les étapes du procédé selon l'une des revendications 1 à 11 lorsque ledit programme est exécuté par un ordinateur.

14. Support d'enregistrement non transitoire lisible par un ordinateur sur lequel est enregistré un programme informatique comportant des instructions pour exécuter les étapes du procédé selon l'une des revendications 1 à 11.
